# EUROPEAN PATENT APPLICATION

(11) **EP 2 508 776 A2**
(43) Date of publication of application: **10.10.2012**
(21) Application number: 12163124.6
(22) Date of filing: 04.04.2012
(51) Int. Cl.: F16H 1/32, F16H 55/18, F16H 57/02, F16H 57/12, F16H 57/022

(54) **Reduction gear**

(30) Priority: 08.04.2011 JP 2011086073
(71) Applicant: Seiko Epson Corporation, Shinjuku-ku Tokyo (JP)
(72) Inventor: Kataoka, Yuya, Nagano, 392-8502 (JP); Kinoshita, Satoshi, Nagano, 392-8502 (JP); Kusumoto, Hiroyuki, Nagano, 392-8502 (JP)
(74) Representative: HOFFMANN EITLE

(57) **Abstract**

A reduction gear includes an outer circumference internal tooth gear having a first tooth; and an inner circumference external tooth gear having a second tooth, wherein the reduction gear relatively rotates while the first tooth and the second tooth are engaged with each other, at least one of the first tooth and the second tooth has an elastic structure and the teeth are incorporated while applying the pressure to a tooth tip so that in a state where the tooth has a shape being elastically deformed, the outer circumference internal tooth gear and the inner circumference external tooth gear are engaged.

## Description

### BACKGROUND

### 1. Technical Field

The present invention relates to a reduction gear.

### 2. Related Art

In the related art, for example, as disclosed in JP-A-5-296301, as technique for eliminating backlash of a reduction gear, there is a technique in which an outer circumference internal tooth gear is a two-stage gear, and they are twisted relatively so that it is possible to regulate the backlash between a fixed sun inner circumference gear and a planetary gear, and between a pin and a pin hole.

In addition, a reduction gear for eliminating backlash is disclosed in JP-A-4-254045. According to the document, as shown in Figs. 8A and 8B, each of the teeth of the gears has a flexible section along one of surfaces which comes into contact with another gear and engages therewith. Accordingly, it is possible to eliminate backlash among the teeth.

However, in the technique for eliminating a backlash of a planetary gear type reduction gear disclosed in JP-A-5-296301, an amount of regulation of a clearance among teeth is constant and fixed. The clearance is varied by position of the planetary gear due to influence such as engagement between a fixed sun inner circumference gear and the planetary gear, precision of output transmission holes or the like. Thus, in a strict sense, there was a problem that it is not possible to eliminate backlash.

In addition, in the technique for eliminating the backlash of the gear disclosed in JP-A-4-254045, backlash is eliminated; however, an elastic structure is included in one side of the tooth so that there was a problem that when a direction of rotation is switched, the switching direction varies output response thereof. Thus, a reduction gear capable of reducing the backlash regardless of the direction of the rotation is required.

### SUMMARY

An advantage of some aspects of the invention is to solve at least a part of the problems described above, and the invention can be implemented as the following forms or application examples.

### Application Example 1

This application example is directed to a reduction gear including an outer circumference internal tooth gear having a first tooth; and an inner circumference external tooth gear having a second tooth, wherein the reduction gear relatively rotates while the first tooth and the second tooth are engaged with each other, and at least one of the first tooth and the second tooth has an elastic structure inside the center thereof and the tooth has a shape being elastically deformed.

In this application example, at least one tooth of the inner circumference external tooth gear and the outer circumference internal tooth gear has the elastic structure inside the center thereof. Accordingly, the tooth shape is capable of being elastically deformed and then the backlash between the teeth is capable of being eliminated. Since the elastic structure is inside the center thereof, it is possible to provide the reduction gear having no backlash regardless of the direction of the rotation.

### Application Example 2

In the reduction gear of the above application example, it is preferable that the inner circumference external tooth gear has an eccentric mechanism and the eccentric mechanism has a regulation mechanism regulating an amount of the eccentricity that is a distance between a center of a circumference where the first tooth is arranged and a center of a circumference where the second tooth is arranged.

In this application example, since the eccentric mechanism of the inner circumference external tooth gear has the regulation mechanism of the amount of the eccentricity, the degree of mating between the first tooth and the second tooth may be regulated. Accordingly, it is possible to absorb variations in the shape of the amount of adjustment of the inner circumference external tooth gear and the outer circumference internal tooth gear caused by reasons of manufacturing.

### Application Example 3

In the reduction gear of the above application example, it is preferable that the inner circumference external tooth gear have output transmission holes, the reduction gear further have an output shaft where output transmission fixing pins that come into contact with the output transmission holes are arranged, and the regulation mechanism regulates a clearance between the output transmission fixing pins and the output transmission holes.

According to this application example, the regulation mechanism regulates the clearance between the output transmission fixing pins and the output transmission holes. Accordingly, the reduction gear is capable of decreasing the backlash.

### Application Example 4

In the reduction gear of the above application example, it is preferable that all of the output transmission fixing pins come into contact with the output transmission holes.

According to this application example, all of the output transmission fixing pins are capable of contributing to the torque transmission. Accordingly, when the output transmits, it is possible to disperse the load on the output transmission fixing pins.

### BRIEF DESCRIPTION OF THE DRAWINGS

The invention will be described with reference to the accompanying drawings, wherein like numbers reference like elements.

Fig. 1A is a schematic front view illustrating a structure of a reduction gear according to a first embodiment, and Figs. 1B and 1C are enlarged schematic views of main portion illustrating tooth shapes respectively.

Fig. 2A is a schematic front view illustrating a state where gears are engaged with pressure applied, and Figs. 2B and 2C are enlarged schematic views of main portions illustrating teeth shapes respectively.

Fig. 3 is a schematic front view illustrating a regulation mechanism of an amount of the eccentricity in an eccentric mechanism of an inner circumference external tooth gear according to a second embodiment.

Fig. 4 is a schematic front view illustrating a regulation mechanism of an amount of the eccentricity in an eccentric mechanism of an inner circumference external tooth gear.

Fig. 5 is a schematic cross-sectional view illustrating a configuration of a regulation mechanism.

Fig. 6 is a schematic side cross-sectional view illustrating a configuration of a reduction gear.

Fig. 7 is a schematic perspective view illustrating a cased reduction gear.

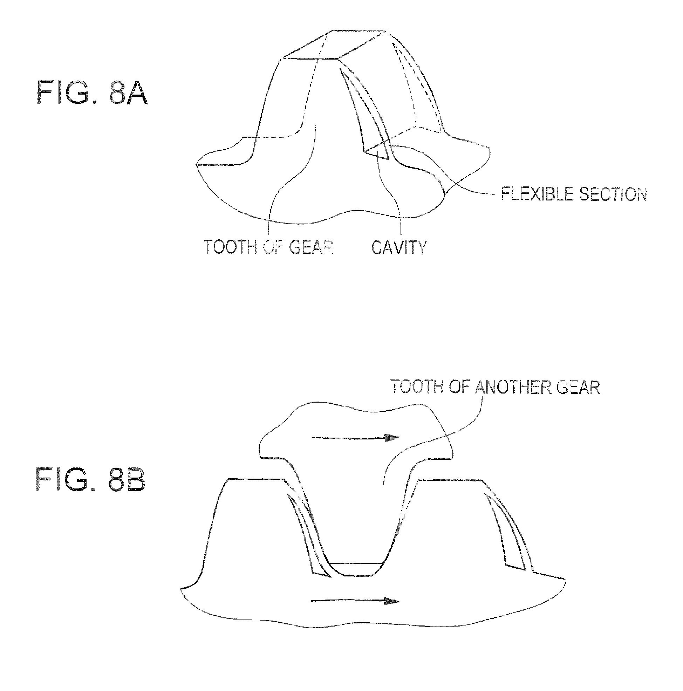

Figs. 8A and 8B are schematic views illustrating a structure of the tooth according to the related art.

### DESCRIPTION OF EXEMPLARY EMBODIMENTS

Hereinafter, embodiments of the invention will be described with reference to the drawings. In addition, in each of the drawings described below, in order to make each member a size of recognizable degree, a scale of each member is different from reality.

### First Embodiment

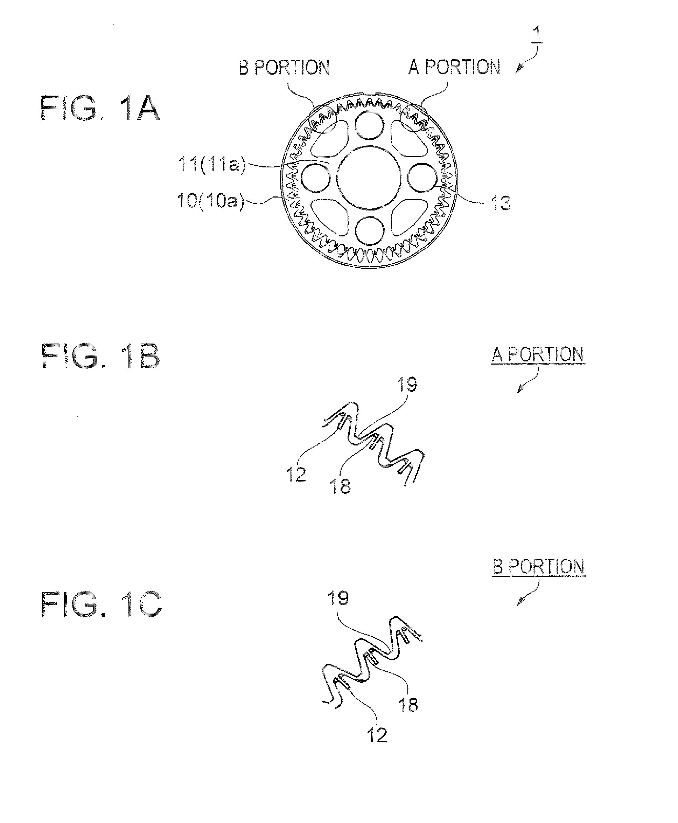

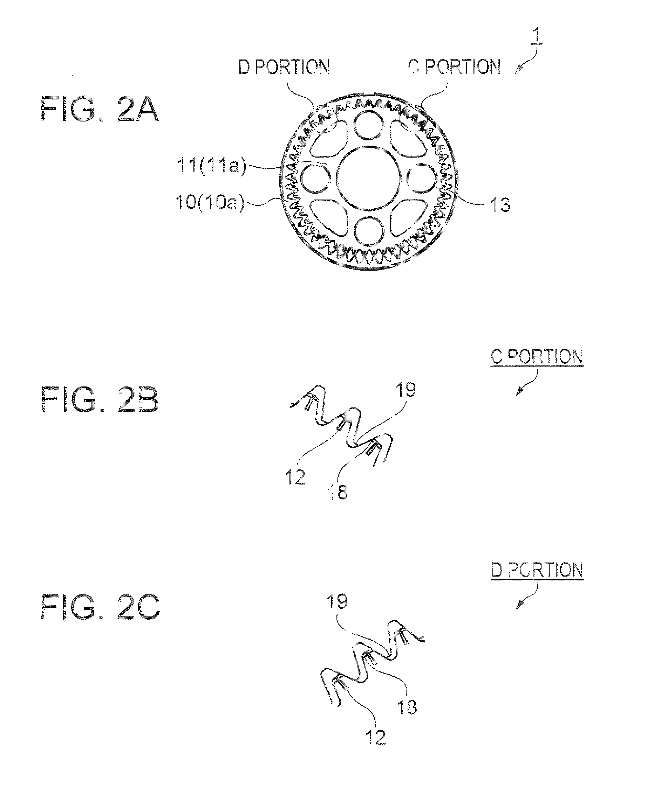

Fig. 1A is a schematic front view illustrating a structure of a reduction gear according to a first embodiment. Figs. 1B and 1C are enlarged schematic views of main portions illustrating the teeth shapes respectively. Fig. 1B is an enlarged view of A portion in Fig. 1A and Fig. 1C is an enlarged view of B portion in Fig. 1A. Fig. 2A is a schematic front view illustrating a state where gears are engaged with pressure applied. Figs. 2B and 2C are enlarged schematic views of main portions illustrating teeth shapes respectively. Fig. 2B is an enlarged view of C portion in Fig. 2A and Fig. 2C is an enlarged view of D portion in Fig. 2A. First, a schematic configuration of the reduction gear as a reduction device according to the first embodiment will be described.

As shown in Figs. 1A to 1C, a reduction gear 1 of the embodiment includes an inner circumference external tooth gear 11 and an outer circumference internal tooth gear 10. The inner circumference external tooth gear 11 includes an external tooth gear main body 11a, and a second tooth 18 of the inner circumference external tooth gear 11 has an elastic structure 12. The outer circumference internal tooth gear 10 is provided with an internal tooth gear main body 10a of an arc shape and a first tooth 19 directing toward the center side of the arc. The second tooth 18 of the inner circumference external tooth gear 11 is less than the first tooth 19 of the outer circumference internal tooth gear 10 in number. Thus, the second tooth 18 of the inner circumference external tooth gear 11 engages with the first tooth 19 of the outer circumference internal tooth gear 10 and shakes while reducing the speed of an input thereof by the difference in the number of teeth.

An elastic structure 12 in the center of the second tooth 18 of the inner circumference external tooth gear 11 leaves a notch, a through hole or the like at the center of the second tooth 18 and a cavity is included inside the tooth so that the structure thereof has elasticity. The outer circumference internal tooth gear 10 is an internal tooth gear engaging with the inner circumference external tooth gear 11. As shown in Figs. 2A to 2C, when the second tooth 18 of the inner circumference external tooth gear 11 engages with the first tooth 19 of the outer circumference internal tooth gear 10 with pressure applied to the first tooth 19, the tooth shape of the second tooth 18 is bent by elastic deformation. At this time, in the C portion illustrated in Fig. 2B, a surface of the second tooth 18 on the left side in the drawing and a surface of the first tooth 19 on the right side are bent while pressed against each other. Meanwhile, in the D portion illustrating in Fig. 2C, a surface of the second tooth 18 on the right side in the drawing and a surface of the first tooth 19 on the left side are bent while pressed against each other. Accordingly, the outer circumference internal tooth gear 10 is pinched with the inner circumference external tooth gear 11. As a result, even when the outer circumference internal tooth gear 10 and the inner circumference external tooth gear 11 relatively rotate right, or left, the rotation can be performed in the absence of the clearance between the first tooth 19 and the second tooth 18.

As described above, according to the reduction gear 1 as the reduction device of the embodiment, advantages can be obtained as below. Since the second tooth 18 and the first tooth 19 are engaged without the clearance, the reduction gear 1 is capable of eliminating the backlash. In addition, since the cavity of a tooth tip is at the center of the tooth, the rotation can be smoothly performed without the backlash in both the right rotation and the left rotation. When the direction of the rotation is switched, the switching direction cannot vary the output response.

At this time, the elastic structure 12 included in teeth of the inner circumference external tooth gear 11 may have an elastic body such as resin instead of the cavity. In addition, not that the teeth of the inner circumference external tooth gear 11 has the elastic structure 12, but that the outer circumference internal tooth gear 10 may have the elastic structure 12. Further, both the first tooth 19 of the outer circumference internal tooth gear 10 and the second tooth 18 of the inner circumference external tooth gear 11 may have the elastic structure 12.

### Second Embodiment

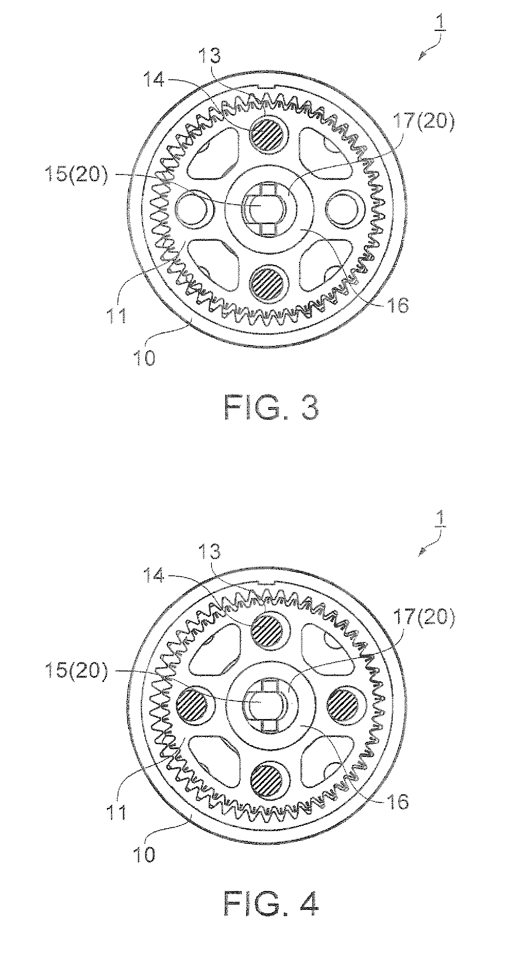

Figs. 3 and 4 are schematic front views illustrating regulation mechanisms of the amounts of the eccentricity in eccentric mechanisms of inner circumference external tooth gears according to a second embodiment respectively. Fig. 3 illustrates a state before the regulation mechanism regulates the amount of the eccentricity. Fig. 4 illustrates a state after the regulation mechanism regulates the amount of the eccentricity. The regulation mechanism of the amount of the eccentricity according to the embodiment will be described with reference to Figs. 3 and 4. In addition, duplicate description of the configurations and the portions that are the same as the first embodiment are omitted.

As shown in Fig. 3, the inner circumference external tooth gear 11 has an eccentric mechanism 17. The eccentric mechanism 17 includes a regulation mechanism 20 of the amount of eccentricity. The outer circumference internal tooth gear 10 has the first tooth 19 arranged along a concentric circle and the inner circumference external tooth gear 11 has the second tooth 18 arranged along a concentric circle. Thus, the difference between positions of the center of the circle formed by the first tooth 19 and the center of the circle formed by the second tooth 18 is referred to as the amount of the eccentricity. The regulation mechanism 20 consists of an input shaft 15, the eccentric mechanism 17 or the like. Thus, a bearing 16 is arranged so as to surround the regulation mechanism 20 and the regulation mechanism 20 is arranged at the center of the inner circumference external tooth gear 11.

The input shaft 15 is a shaft receiving an input of the reduction gear 1. The eccentric mechanism 17 is eccentric from the input shaft 15 by a design value, and the input shaft 15 has the mechanism. The regulation mechanism 20 of the amount of the eccentricity is a mechanism fixing the eccentric mechanism 17 to the input shaft 15 with any amount of the eccentricity. As shown in Figs. 2A to 2C, the regulation mechanism 20 fixes the amount of the eccentricity in any position so that the position of the inner circumference external tooth gear 11 with respect to the position of the outer circumference internal tooth gear 10, pressure that is applied to the second tooth 18 and the first tooth 19, and bending amount of the second tooth 18 are capable of being arbitrarily regulated.

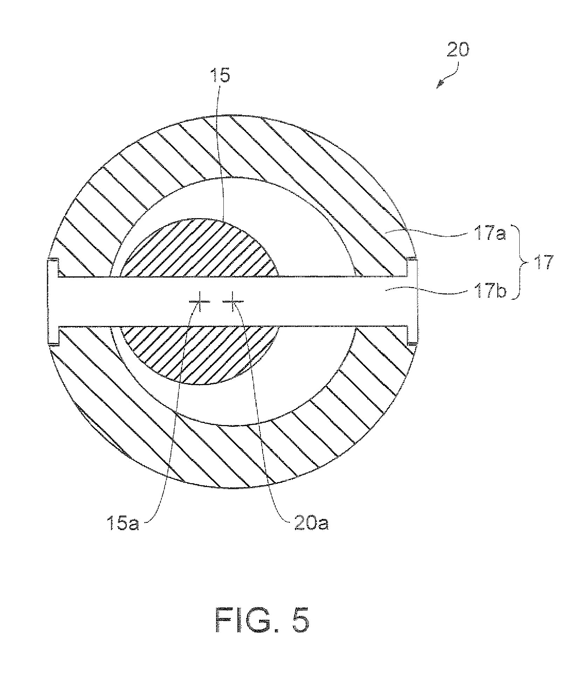

Fig. 5 is a schematic cross-sectional view illustrating a configuration of the regulation mechanism. The regulation mechanism 20 includes the eccentric mechanism 17, and the eccentric mechanism 17 includes a cylindrical section 17a and a screw shaft section 17b. The cylindrical section 17a has a cylindrical shape and the input shaft 15 is arranged inside thereof. An axial direction of the cylindrical section 17a and an axial direction of the input shaft 15 are parallel to each other. Thus, the screw shaft section 17b having column-shape is disposed penetrating the cylindrical section 17a and the input shaft 15. The axial direction of the screw shaft section 17b is a direction orthogonal to the axial direction of the cylindrical section 17a and the input shaft 15.

In the input shaft 15, a female screw is formed at the surface coming into contact with the screw shaft section 17b. Thus, a male screw is formed at the outer circumference of the screw shaft section 17b. Accordingly, a linear motion mechanism is formed, in which the input shaft 15 moves in the left and right in the drawing by rotating the screw shaft section 17b. Thus, a distance between a shaft 15a of the input shaft 15 and a shaft 20a of the regulation mechanism 20 can be regulated by rotating the screw shaft section 17b.

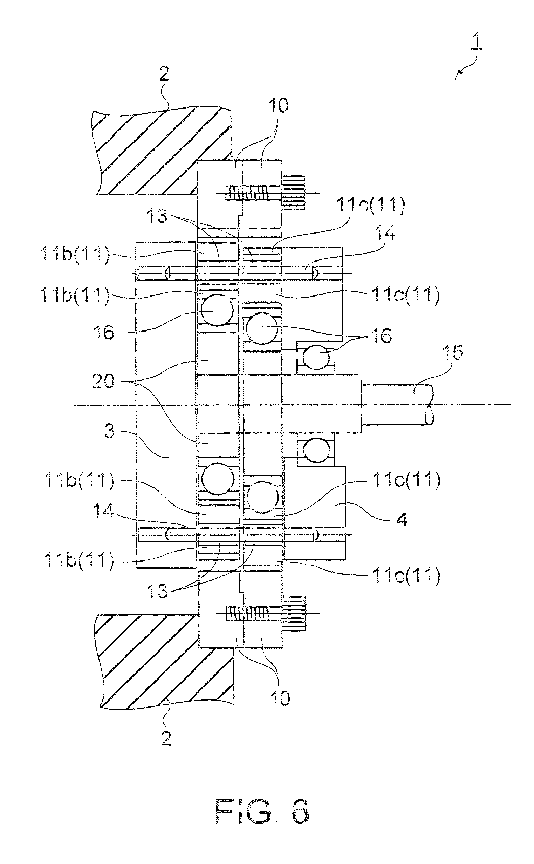

Fig. 6 is a schematic side cross-sectional view illustrating a configuration of the reduction gear. As shown in Fig. 6, the reduction gear 1 is disposed at a base 2 that has a hole for use. The outer circumference internal tooth gear 10 is fixed at the base 2. A first inner circumference external tooth gear 11b and a second inner circumference external tooth gear 11c are disposed at the outer circumference internal tooth gear 10. The first inner circumference external tooth gear 11b and the second inner circumference external tooth gear 11c are the same shape as the inner circumference external tooth gear 11. Thus, the first inner circumference external tooth gear 11b and the second inner circumference external tooth gear 11c are disposed with the centers of the shafts shifted in the up and down direction in the drawing. Thus, the first inner circumference external tooth gear 11b and the second inner circumference external tooth gear 11c press the outer circumference internal tooth gear 10 in the up and down direction.

The regulation mechanism 20 is disposed at the center side of the inner circumference external tooth gear 11 via the bearing 16. Thus, the input shaft 15 is disposed at the regulation mechanism 20. A first support plate 3 and a second support plate 4 are disposed so as to pinch the inner circumference external tooth gear 11. The first support plate 3 and the second support plate 4 are fixed by the fixing pins 14 as the output transmission fixing pins. Accordingly, the first support plate 3 and the second support plate 4 do not relatively move. Gap is arranged and lubricant is provided between the first support plate 3, the first inner circumference external tooth gear 11b, the second inner circumference external tooth gear 11c and the second support plate 4 respectively. Accordingly, each member can move with little friction.

Return to Fig. 4, four output transmission holes 13 are formed at the inner circumference external tooth gear 11. Thus, the fixing pins 14 are disposed through all of the output transmission holes 13. Thus, the regulation mechanism 20 is regulated so that the clearance between the fixing pins 14 and the output transmission holes 13 are capable of being regulated. The amount of the eccentricity of the center shaft of the inner circumference external tooth gear 11 and the input shaft 15 is capable of being regulated by the regulation mechanism 20. Thus, when the amount of the eccentricity is appropriate, the output transmission holes 13 and the fixing pins 14 come into contact with each other. Accordingly, the fixing pins 14 come into contact with all of the output transmission holes 13.

Accordingly, when the inner circumference external tooth gear 11 rotates, the torque is transmitted to the fixing pins 14. Return to Fig. 6, the torque transmitted to the fixing pins 14 is transmitted to the first support plate 3 and the second support plate 4. Accordingly, the first support plate 3 and the second support plate 4 function as the output shaft.

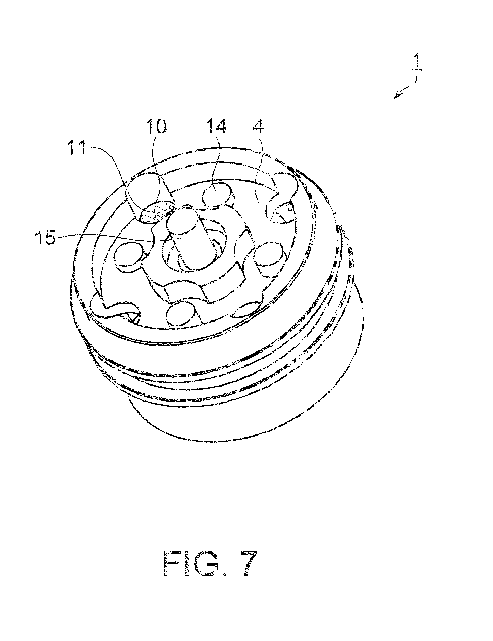

Fig. 7 is a schematic perspective view illustrating the cased reduction gear. As shown in Fig. 7, the outer circumference internal tooth gear 10 and the inner circumference external tooth gear 11 are disposed inside the reduction gear 1. Thus, the input shaft 15 rotates so that the second support plate 4 rotates with reduced speed of rotation.

As described above, according to the regulation mechanism 20 of the amount of the eccentricity having the eccentric mechanism 17 of the inner circumference external tooth gear 11 of the embodiment, advantage described below can be obtained adding to the advantage of the first embodiment. As shown in Figs. 2A to 2C, since the pressure that is applied to the second tooth 18 and bending amount of the second tooth 18 can be arbitrary regulated, the variations of the dimensions of the parts are capable of being absorbed by the range of the regulation. In addition, as shown in Fig. 4, since the clearance between the output transmission holes 13 and the fixing pins 14 can be arbitrarily regulated, the backlash can be regulated. In addition, since all of the fixing pins 14 are capable of contributing to the transmitting of the torque, the stiffness is capable of being maintained.

## Claims

1. A reduction gear comprising:
an outer circumference internal tooth gear having a first tooth; and
an inner circumference external tooth gear having a second tooth,
wherein the reduction gear relatively rotates while the first tooth and the second tooth are engaged with each other, and
at least one of the first tooth and the second tooth has an elastic structure inside the center thereof and the tooth has a shape being elastically deformed.

2. The reduction gear according to claim 1,
wherein the inner circumference external tooth gear has an eccentric mechanism and the eccentric mechanism has a regulation mechanism regulating an amount of the eccentricity that is a distance between a center of a circumference where the first tooth is arranged and a center of a circumference where the second tooth is arranged.

3. The reduction gear according to claim 1 or claim 2,
wherein the inner circumference external tooth gear has output transmission holes,
wherein the reduction gear further has an output shaft where output transmission fixing pins that come into contact with the output transmission holes are arranged, and
wherein the regulation mechanism regulates a clearance between the output transmission fixing pins and the output transmission holes.

4. The reduction gear according to claim 3,
wherein all of the output transmission fixing pins come into contact with the output transmission holes.

5. A reduction gear that rotates while engaging a first tooth of an outer circumference internal tooth gear and a second tooth of an inner circumference external tooth gear,
wherein at least one of the first tooth and the second tooth has an elastic structure.

6. The reduction gear according to any of claims 1-5,
wherein the elastic structure is a notch structure in a portion of the gear.

7. The reduction gear according to any of claims 1-6,
wherein the elastic structure is a structure having a cavity inside the gear.

8. The reduction gear according to any of claims 5-7,
wherein the inner circumference external tooth gear has an eccentric mechanism and the eccentric mechanism has a regulation mechanism regulating an amount of the eccentricity that is a distance between a center of a circumference where the first tooth is arranged and a center of a circumference where the second tooth is arranged.

9. The reduction gear according to any of claims 5-8,
wherein the inner circumference external tooth gear has output transmission holes,
wherein the reduction gear further has an output shaft where output transmission fixing pins that come into contact with the output transmission holes are arranged, and
wherein the regulation mechanism regulates a clearance between the output transmission fixing pins and the output transmission holes.

10. The reduction gear according to claim 9,
wherein all of the output transmission fixing pins come into contact with the output transmission holes.
